# EUROPEAN PATENT APPLICATION

(11) **EP 1 264 766 A1**
(43) Date of publication of application: **11.12.2002**
(21) Application number: 01202192.9
(22) Date of filing: 08.06.2001
(51) Int. Cl.: B63B 35/44, B63B 29/12

(54) **Offshore structure comprising a stabilised processing column**

(71) Applicant: Offshore Energy Development Corporation, 98007 Monaco Cedex (MC)
(72) Inventor: Pollack, Jack, 98000 Monaco (MC); Van Wijgaarden, Willem Cornelis, 4205 VH Gorinchem (NL)
(74) Representative: Jorritsma, Ruurd

(57) **Abstract**

The invention relates to an offshore structure (1) with a floating support (4) carrying process equipment (5) and a processing column (6) supported thereon. The processing column (6) is connected via a hinging connection (12) such as to maintain its upright position under low frequency inclinations of the vertical centre line of the floating support. Hereby, efficiency of liquid and gas contacting in the column under sea going conditions is maintained.

## Description

The invention relates to an offshore structure comprising a floating support carrying processing equipment for hydrocarbons and a vertical column with a vertical centre line and an upper end and an lower end, the column having internal distribution members for contacting liquid and gaseous products comprising hydrocarbons.

Plants for the production of methanol using natural gas as a feedstock are well known. These plants consist of a feed gas pre-treatment plant, a steam-natural gas reformer, a steam-producing waste heat recovery system usually combined with the exhaust of the reformer, a synthesis reactor and a distillation section. Many recent methanol plants utilize a basic design developed by Imperial Chemicals Industries and known generally as the ICI low-pressure methanol process. This process is described in the January 1975 issue of Hydrocarbon Processing. Plants utilizing the ICI design are presently available, and the basic process of converting natural gas to methanol does not constitute a part of this invention

Columns with dumped or random packings, stacked packings or structured packings are widely used in the chemical, oil, gas and other process industries for separation processes (for example, absorption, desorption, rectification, stripping and distillation) and as reactors in which packings are used to bring gases and liquid into direct contact in order to transfer heat or constituents from one phase to the other. Two of the great advantages of packed columns are the low capital cost and the large contact area of packings.

Packed columns suffer from liquid and gas channelling even when they are vertically positioned, and this channelling can cause a reduction in column efficiency, while packed columns which are used on board floating platforms and processing ships may suffer a much more serious liquid and gas channelling due to tilt. Channelling could cause a severe reduction of performance even under tilt of a few degrees.

The liquefaction of natural gas at remote sites, transportation of the liquefied natural gas (LNG) to population centers, and storage and vaporization of LNG for local consumption have been successfully practised for many years around the world. LNG production sites are usually located on land at remote sites having docking facilities for large LNG tankers, which transport the LNG to end-users.
Recently, commercial interest has been increasing in the potential recovery of offshore gas reserves. The recovery of these reserves has generated a growing need for gas liquefaction systems amenable to installation on ships, barges, and offshore platforms. Recently, offshore plants, or large-scale chemical plants constructed on floating offshore structures for natural gas liquefaction, ethylene manufacture, ammonia synthesis, urea processing and other processes, have come into practical use. Typically, the fluid or fluids flowing through the process vessel comprise a liquid or a gas or combination thereof.

Gas-liquid contactors, e.g., columns for distillation, rectification, and absorption processes, are needed for the offshore separation or purification of mixtures, removal of trace ingredients, or for other purposes. The equipment is often built of a vertical cylinder having a number of packings or trays held inside so that vapour is forced through liquid held up on the trays to effect gas-liquid contacting.

It has been reported that very long, onshore used, packed columns which (permanent) tilted under the effect of high wind, or their own weight or from thermal effects or which tilted when their foundation settled, suffered performance reduction similar to the performance reduction suffered by tilted packed columns used offshore on board floating production platforms and ships.

Floating platforms and processing ships permit some horizontal and vertical motion and tilt. This motion and tilt can cause severe liquid and gas channelling, which could lead to a severe reduction in the performance of the packed columns. The main cause of the reduction in the performance of the tilted packed columns is due to the severe liquid and gas channelling, where liquid tends to channel through one side of the column and the gas channels through the other side of the column, hence reducing the total surface area of contact between the liquid phase and the gas phase, and reducing the degree of contact between the two phases in the column whether the process is distillation, absorption, desorption, stripping, or chemical reaction.

A permanent inclination is considered to be the most critical situation for a separation column. Some authors have described the efficiency drop of packed columns in inclined positions. For a distillation column Weedman J. A. and Dodge B. F. 1947, Ind and Engng Chem 29 732 have shown that, beginning at about 1 degree inclination, efficiency drastically drops to about 50% at 2.5. degree.
At present there are fluid redistributors designed to correct channelling in process vessels at discrete positions along the length of the vessel (see under prior art). However these redistributors are designed such that the fluid is redistributed on specific planes of the packed column which creates a sizeable bottleneck in higher flow rates of the fluid and can occupy a significant volume of the column and increase column weight.

In a tilted column, these fluid redistributors may increase the liquid and gas channelling and accelerate its occurrence due to their design which help transfer the liquid quickly to the lower inclined part of the column from the other part of the column of the same axial level.

A processing plant located on a floating structure is subject to motion from wave action and weather conditions, and certain types of process equipment are more sensitive to motion than others. In particular, tall distillation columns are extremely sensitive to motion, as the efficiency of the columns drops drastically if the columns deviate more than a very few degrees from the vertical, On the other hand, the other sections of a methanol plant using natural gas as a feedstock are not particularly sensitive to motion, and can be operated more or less normally even in reasonably severe weather conditions on a floating structure. Accordingly, a conventional methanol plant cannot be effectively used on a floating structure because of the sensitivity of the distillation section to motion and inclination, and modifications are necessary in order to provide an efficient plant on a floating structure.

With those offshore plants it is inevitable that the structures are subjected to periodic pitching, rolling, or other oscillating motion or to static inclination by the external forces of waves, winds, tides, currents, ect.

Accordingly, the gas-liquid contactors, which usually are 50 meters or more in height, can be seriously influenced by very slight oscillation and static inclination, leading to inadequate vapor-liquid contact due to channelling of the liquid on the trays and noncontact flow of the gas stream. It also causes changes in the quantities of hold-ups on the trays and invites uneven distribution of the liquid level on each tray, deep here and shallow or totally free of the liquid there: the liquid level near the inner wall surface on one side of the contactor in the inclined direction is higher than near the opposite side. As a result, near the inner wall surface on one side of the contactor, the quantity of the liquid that overflows the tray is large.

This brings disadvantages, such as low efficiency of contact between the gas and liquid that pass countercurrent on the trays and unsatisfactory separation performance of the apparatus.

US4603022 describes a new gas-liquid contactor for offshore use with a new tray design within the process vessel. US5632962 also describes a new design for offshore use of a contacting column redistributor for use in effecting improved fluid distribution through a process vessel. US413732 describes a floating methanol plant and is focussed on a flexible plant design to operate portions of the plant independently so that motion-sensitive parts of the plant, such as tall distillation columns for methanol purification, can be operated only during good weather, while sections of the plant less sensitive to motion can operate during more severe weather.

It is an object of the present invention to provide an offshore structure having a vertical processing column, which has good processing efficiencies under sea going conditions. Thereto the column of the offshore structure according to the present invention is mounted on the support along its length or at one of its ends via a frame in a pivoting connection such that the vertical centre line can pivot around two perpendicular horizontal axes in response to slow inclinations of the vertical axis of the floating support.

The invention is based on the realisation that largest contribution to the inefficiency of the column, which may for instance be a gas- liquid contactor or separator, is derived from more or less static heel and trim of the floating support due to wind, wave directions, currents, tides etc., which create a more or less static inclination. With "slow inclination" as is used herein, it is meant inclinations which change with a period larger than 25 seconds, preferably larger than 0.5 hour, more preferably larger than several hours. The "slow inclination" may also be a static or semi-static inclination. The present invention aims at compensation of these inclinations whereas dynamic inclinations are taken up by internal process column designs, such as for instance described in US patent no. 4603022 and 5632962.

By providing a compensation for the slow inclinations, it becomes possible to use an oscillating base such as a floating offshore plant as a support for hydrocarbon processing such as for natural gas liquefaction The compensating system may be a passive system in which the column is suspended from a frame structure, for instance via a ball-joint or gimbal-table. Damping members such as hydraulic or pneumatic cylinders or weights may be added to the column to place the natural period of oscillation outside the high frequency domain. The suspended column may also be combined with active compensator means such as hydraulic cylinders which act on the frame or on the column.

In an other embodiment the column is at its lower end supported on a frame via a pivoting connection, displacement members being connected to a control unit which actuates the displacement members for maintaining the vertical centre line of the column at a substantially constant position.

Some embodiments of the offshore structure according to the present invention will be described in detail with reference to the accompanying drawing. In the drawing:
Fig. 1 shows a passive compensating system for a processing column; and
Fig. 2 shows a active compensating system according to the present invention.

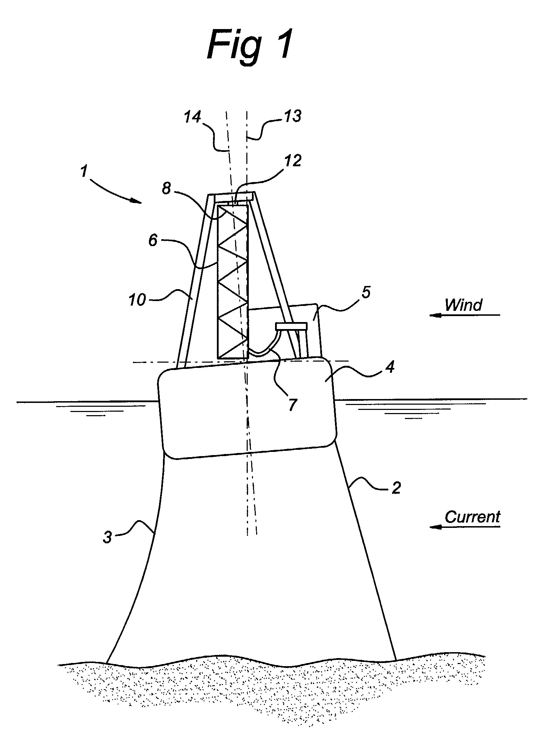

Fig. 1 shows an offshore structure 1 such as FPSO or moving platform, which is anchored to the seabed via anchor lines 2, 3. The offshore structure 1 comprises a floating support 4 carrying processing equipment 5 such as for instance a natural gas liquefaction plant. A processing column 6 such as for instance a gas-liquid contactor for distillation, rectification and/or absorption processes is connected to the processing plant 5 via a flexible pipe 7. The column 6 comprises internal distribution members 8 such as trays for effecting gas-liquid contacting. The layout of the internal distribution members 8 is such that high frequency oscillations of the column 6 do not impact on the gas-liquid contacting efficiency. The internal distribution members may for instance be constructed according to US patent no. 4,603,022 and 5,632,962, which are incorporated herein by reference.

The column 6 is suspended from a frame 10 on deck of the floating support 4. At the upper end of the column 6, which may have a height of for instance 50 metres, a ball-joint 12 is provided along the centre line 13 of the column 6 to pivot around two perpendicular axis, one of which extends in the plane of the drawing, the other extending perpendicular to the plane of the drawing. When wind and current forces cause the floating support 4 to tilt such that its vertical centre line 14 is inclined from its vertical position, the centre line 13 of the column 6 will remain in its substantially vertical orientation. It is possible to add a displacement member such as a hydraulic or pneumatic cylinder between the frame 10 and the lower end of the column 6 for damping and/or actively displacing the vertical centre line 13 of the column 6.

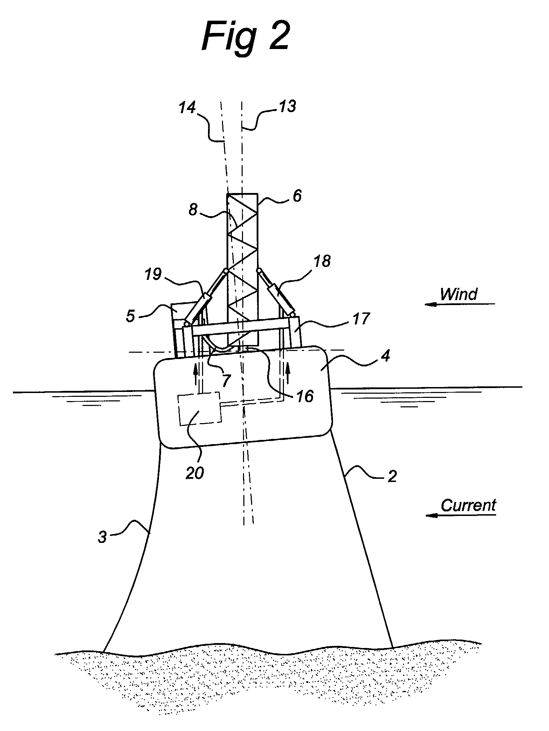

Fig. 2 shows an active compensation system according to the present invention in which the column 6 is at its lower end connected to the floating support 4 via a ball-joint 16. Hydraulic cylinders 18, 19 are on one side connected to the column 6 and on the other side to a support frame 17. The cylinders are operated by a control unit 20 which actuates the cylinders 18, 19 in response to low frequency inclinations of the floating support 4. With "low frequency" it is meant wind and current-induced inclinations of the vertical centre line 14 of the floating support 4 with a period longer than 0.5 hour, for instance several hours or days. The high frequency oscillations of the floating support 4 and/of column 6 are of little influence on the columns efficiency in view of the layout of internal distribution members 8.

The column 6 may have a circular, square or rectangular cross-section or have any suitable shape. Its cross-sectional area may vary along its height and be for instance frusto-conical.

The ball-joint at the upper or lower end of the column 6 may be replaced by a gimbal-table construction. The gimbal-table can be placed not only at the upper or lower end of the column 6, but can be placed anywhere along the length of the column 6. Preferable the column 6 is free hanging within the gimbal-table such that the point of gravity of the column is below the connection points of the column with the gimbal-table. Such a free hanging construction of the column 6 from a ball-joint or within a gimbal-table, can be combined with an active compensation system as shown in Fig. 2.

In the free hanging construction shown in Fig. 1, damping weights or any other active or passive damping system may be added such that the frequency of the column 6 is outside the frequencies of roll, pitch, sway of the floating support under different sea states.

## Claims

1. Offshore structure (1) comprising a floating support carrying (4) processing equipment (5) for hydrocarbons, a vertical column (6) with a vertical centre line (13) and an upper end and a lower end, the column having internal distribution members (8) for contacting liquid and gaseous products comprising hydrocarbons, and a fluid connection (7) between the processing equipment (5) and the column (6), wherein the column is mounted on the support (4) along its length or at one of its ends via a frame (10, 17) in a pivoting connection (12, 16) such that the vertical centre line can pivot around two perpendicular horizontal axes, in response to slow inclinations of the vertical axis of the floating support.

2. Offshore structure (1) according to claim 1, comprising a displacement member (18, 19) which is connected to a control unit (20) that is adapted to actuate the displacement member (18, 19) for displacing the vertical centre line (13) of the column (6) by an amount corresponding to a slow inclination of a vertical axis (14) of the floating support (4) for maintaining the vertical centre line (13) at a constant position.

3. Offshore structure (1) according to claim 1 or 2, the control unit (20) compensating variations in the inclination of the vertical axis (14) of the structure (4) with a period larger than 25 seconds, preferably larger than 0.5 hour.

4. Offshore structure (1) according to claim 1, 2 or 3, wherein the column (6) is with its upper end suspended from the frame (10) via the pivoting connection (12).

5. Offshore structure (1) according to claim 4, the frame (10), having at least two legs, a displacement member being connected to at least one leg for lengthening or shortening the leg.

6. Offshore structure (1) according to claim 1 or 2, wherein the column (6) is at its lower end supported by the frame (17), the displacement member (18, 19) being on one side connected to the offshore structure and on the other side to the column (6).

7. Offshore structure (1) according to any of the preceding claims, wherein a damping member is connected to the column for damping movements with a period shorter than 0.5 hour, preferably shorter than 25 seconds.

8. Offshore structure (1) according to claim 7, the damping member comprising a weight.

9. Offshore structure (1) according to any of the preceding claims, the pivoting connection (12, 16) comprising a ball joint.

10. Offshore structure (1) according to any of claims 1-8, the pivoting connection comprising a gimbal-table.

11. Offshore structure (1) according to any of the preceding claims, the fluid connection (7) comprising a flexible line.
